# EUROPEAN PATENT APPLICATION

(11) **EP 1 868 324 A2**
(43) Date of publication of application: **19.12.2007**
(21) Application number: 07011782.5
(22) Date of filing: 15.06.2007
(51) Int. Cl.: H04L 12/28, H04L 29/06

(54) **System and method for representing an infrared pass-through protocol in a home network**

(30) Priority: 16.06.2006 US 424782
(71) Applicant: Sharp Kabushiki Kaisha, Osaka-shi, Osaka 545-8522 (JP)
(72) Inventor: Hlsany, Daryl, Vancouver, WA 98664 (US); Wade, Steven A., Jr., Portland OR 97214 (US); Sato, Junsei, Vancouver, WA 98664 (US)
(74) Representative: Müller - Hoffmann & Partner

(57) **Abstract**

A system and method in a local area network (20) represents an infrared (IR) remote control (RC) pass-through protocol in the Content Directory Service (CDS) of a media server (10) that transmits an audio-video (AV) media stream over the network (20) to a media renderer (40). The CDS includes a listing of media content items that represent media source devices (30, 31) that provide media content to the media server (10), and a listing of associated IR pass-through protocol identifiers (IRPT-IDs) for each media content item. Each IRPT-ID identifies an IR pass-through encoding/decoding protocol usable by the IR decoder in the media server (10). In the media server (10), RC commands are decoded using the same IR pass-through protocol and then IR transmitted via IR to the media source device (30, 31) to control its operation.

## Description

### FIELD OF THE INVENTION

This invention relates generally to home networks that transmit audio and/or video (audio-video or "AV"), and more particularly to a system and method in a home network based on the Universal-Plug-and-Play (UPnP^{™}) technology for representing an infrared (IR) remote control (RC) pass-through protocol in the UPnP Content Directory Service (CDS).

### BACKGROUND OF THE INVENTION

Local area networks (LANs) are now in wide use in home and office environments. Home LANs typically include wired LANs, like 10/100baseT Ethernet, and wireless local area networks (WLANs), such as those based on the well-known IEEE 802.11 or Wi-Fi standards. Another type of LAN, one that does not use wireless transmission, is a powerline communications (PLC) network that uses the existing electrical wiring in a home or single building, such as a PLC network based on the HomePlug^{™} standard.

Home LANs are now widely used for the transfer of audio and/or video (audio-video or "AV") media content between consumer electronic (CE) devices. The Digital Living Network Alliance (DLNA) is an organization that promotes seamless interoperability of CE, personal computer (PC), and other electronic devices over the home network. The DLNA has adopted UPnP AV technology for media management and control to enable devices and applications to identify, manage and distribute AV media content to ensure an interoperable home network.

UPnP AV technology defines two AV devices, a Media Server and a Media Renderer. The user must be able to browse the AV media items stored on the Media Server or available for transmission from one or more media source devices connected to the Media Server, select a specific item, and cause it to be played on the Media Renderer. For maximum convenience, it is desirable to allow the user to do this from a variety of media rendering devices because it is not likely that the user will interact directly with a media source device. To provide a uniform mechanism for media rendering devices to browse the AV media items available from the Media Server and to obtain detailed information about individual items, UPnP AV technology defines a Content Directory Service (CDS) in the Media Server. The CDS provides a method for the Media Server to publish a listing of the media items that it can serve, along with related metadata that describe the items. UPnP technology is built upon the Extensible Markup Language (XML), so CDS is defined primarily by XML schema, but additional constraints may be placed on it by other standards.

Most AV devices that can function as media source devices or media rendering devices include an associated infrared (IR) remote control (RC). However, in a typical home network the media source device is located remotely from the media rendering device, often in another room. It would thus be desirable to be able to control the media source device using an IR RC at the media rendering device. This is not possible using current technology and standards, because the RC commands transmitted by the IR RC are encoded by the media source device using an IR encoding scheme or protocol that can not be ascertained by the media renderer. Different CE device manufacturers may use different IR protocols, so the IR protocol may be different for different AV media source devices.

What is needed is a system and method in a home network for representing an IR pass-through protocol to enable reception and encoding of RC commands at a media rendering device, transport of the encoded commands across the network, and decoding of the commands for controlling the media source device.

### SUMMARY OF THE INVENTION

In accordance with the system and method of the invention, an AV media server system includes a media server that receives AV media content from one or more media source devices, transmits it as an AV media stream over a local area network to a media renderer, and receives encoded IR RC commands from the media renderer for controlling the media source device. The media server is connected to one or more media source devices and has at least one IR transmitter (sometimes called an IR "blaster") that can transmit IR RC commands to the media source devices. The media server is a UPnP Media Server device that includes a Content Directory Service (CDS) expressed in Extensible Markup Language (XML). The CDS includes a listing of media source devices, which are defined in the CDS as media content "items". For each media content item in the CDS, if the item is controllable by IR RC, there is also at least one IR pass-through protocol identifier (IRPT-ID) in the CDS that is associated with the media content item. Each IRPT-ID identifies an IR pass-through encoding/ decoding scheme or protocol that is used to carry the IR signal over the network. The media server may need to support more than one IR pass-through encoding/decoding scheme or protocol, so there may be a plurality of different IRPT-IDs associated with each media content item. For each IRPT-ID there is also an internet protocol (IP) connection point IRPT-CP (i.e., IP address and port number) used by the media renderer to establish a communication connection with the media server. There may be only one IR transmitter in the media server for controlling all the media source devices. If there is more than one IR transmitter in the media server, for example if there is one IR transmitter for each media source device connected to the media server to assure that IR RC commands can reach all of the media source devices, then each IRPT-CP also functions to identify which IR transmitter will be used by the media server so that the correct media source device is controlled.

In one implementation a first resource (RES) XML element in the CDS has a first attribute representing the media format of a media content item and a second attribute representing the IRPT-ID associated with that media content item. In another implementation the media content item associated with the IRPT-ID includes a second resource (RES) XML element representing the IRPT-ID. In still another implementation the media content item associated with the IRPT-ID is represented in a first XML namespace and the IRPT-ID is represented in a second XML namespace.

The method enables IR RC of the media source device (or devices if there is more than one) by the media renderer. The media renderer browses the CDS to identify the media content item and its associated IRPT-ID (or IRPT-IDs if there is more than one). At the media renderer the IR RC sends RC commands to the IR receiver.

The output of the IR receiver is then encoded at the media renderer using the IR pass-through encoding/decoding protocol represented by the IRPT-ID. The encoded RC commands are then transmitted over the network from the media renderer to the media server, using the IRPT-CP associated with the IRPT-ID, in the reverse direction of the AV media stream. The encoded RC commands are decoded at the media server according to the same IR pass-through encoding/ decoding protocol represented by the IRPT-ID and then sent to the IR transmitter. The media server's IR transmitter then transmits them as IR RC commands to the media source device to control its operation.

According to the invention, when an encoded infrared remote control signal is supplied from a media renderer or the like to an audio/video media server via a local area network, an infrared decoder decodes the encoded infrared remote control signal into a remote control command for transmission from an infrared transmitter to a media source device, and the infrared transmitter sends the decoded infrared remote control command to the media source device. As a result, it is possible to control the media source device by the infrared remote control command. This allows the media renderer or the like to control the media source device over the local area network.

Furthermore. according to the invention, the audio/video media server is provided with a memory including at least one IR pass-through protocol identifier representing an IR pass-through encoding/decoding scheme usable by the infrared decoder. Therefore the infrared decoder can decode the infrared remote control signal into the remote control signal for transmission, based on the IR pass-through encoding/ decoding scheme represented by the IR pass-through protocol identifier. On this account, even when the audio/video media server is connected to plural AV media source devices using different IR signals, the audio/video media server can control the AV media source devices by sending, to the respective AV media source devices, remote control signals for transmission, which are suitable for the respective AV media source devices.

Furthermore, according to the invention, the IR pass-through protocol identifiers are associated with respective media content items. On this account, when, as an encoded infrared remote control signal, a signal by which a particular media content item is selected and played back is supplied to the audio/video media server, the infrared decoder can decode the infrared remote control signal into a remote control signal for transmission, based on an IR pass-through encoding/decoding scheme represented by an IR pass-through protocol identifier corresponding to the selected media content item. In this way, a remote control signal for transmission, which corresponds to the selected media content item, is sent to the AV media source devices so that a media content item corresponding to the selected media content item is supplied from the AV media source device corresponding to the selected media content item. Furthermore, according to the invention, the audio/video media server receives a media content from the media source device over the local area network, converts the received media content into a format that can be transmitted over the network by an adopter, and sends the media content to the media renderer or the like. As a result, it is possible to send, to the media renderer or the like, a media content corresponding to the selected media content item.

For a fuller understanding of the nature and advantages of the invention, reference should be made to the following detailed description taken together with the accompanying figures.

### BRIEF DESCRIPTION OF THE DRAWINGS

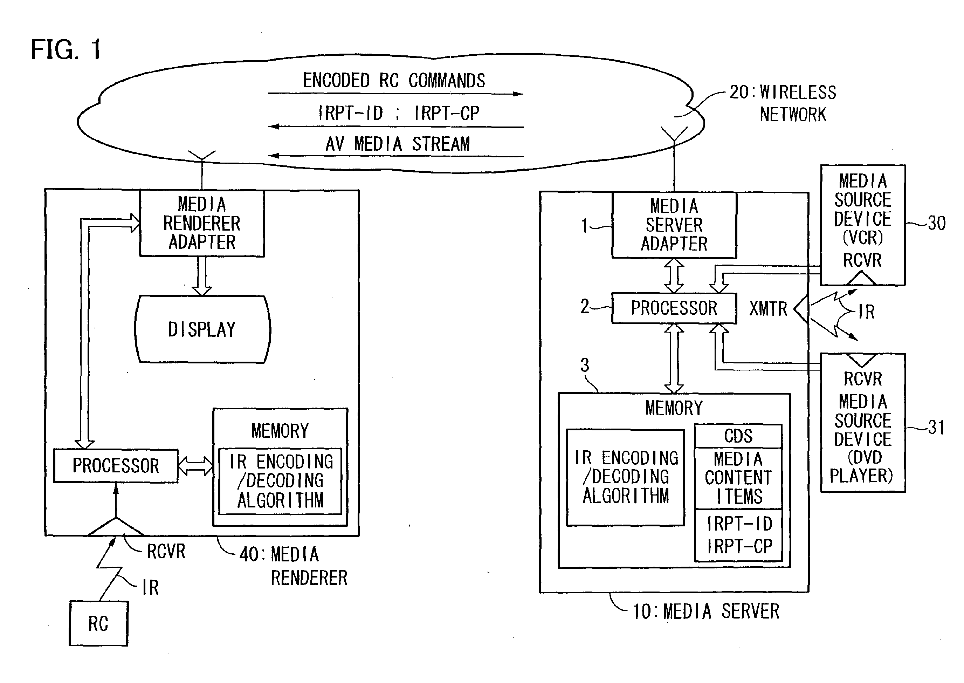

Fig. 1 is a block diagram of a home network with the system and method of this invention.

### DESCRIPTION OF THE EMBODIMENTS

This invention allows the discovery of a specific IR pass-through protocol used to control a network device. It allows a media rendering device to determine when connecting to an AV media stream if the stream can be controlled by IR RC and the IR pass-through protocol used to carry the RC commands over the network. The invention is applicable to a system and method in a local area network based on the Universal Plug and Play (UPnP^{™}) technology. The invention is applicable to a home network that distributes AV media content between a serving device and a rendering device, and in particular to a home network that uses UPnP AV technology. UPnP technology is defined in "UPnP Device Architecture, Version 1.0," and is built upon Internet Protocol (IP), Transmission Control Protocol (TCP), User Datagram Protocol (UDP), Hypertext Transfer Protocol HTTP, and Extensible Markup Language (XML).

UPnP AV technology defines a Media Server, a Media Renderer and a Control Point. The Media Server has access to media content and can send that media content to other devices on the network. Examples of newer digital devices that can function as a Media Servers include MP3 servers, personal video recorder (PVRs), and Home Media Servers such as the personal computer (PC). Traditional media source devices that can connect to a Media Server include VCRs, CD players, DVD players, audio-tape players, still-image cameras, camcorders, radios, TV Tuners, and set-top boxes. The Media Renderer is able to receive media content and render that content. Examples of media rendering devices include traditional devices such as TVs and stereo systems. In typical implementations, the Media Renderer is either connected to or integrated with a display device for displaying the rendered content. The Control Point coordinates the operation of the Media Server and the Media Renderer to accomplish the desires of the user.

The UPnP AV specification includes a template for necessary services to manage the Media Renderer and Media Server. Such services include a connection manager service, an AV transport service, and a Content Directory Service (CDS). The connection manager service provides the methods for a control point to get sink and source capabilities of media source devices (called media content "items" in the CDS) and media rendering devices, along with other control details. The AV transport service provides control methods for media rendering devices.

The CDS provides control methods and schema for organizing media content and its attributes. In implementations of the CDS, media files (e.g., audio files, video files, images, etc.) and live media content are represented as objects. The current version of the CDS specification describes a class system for representing media objects. The base class is the object class. Two classes are derived from the object class, the item class and the container class. An item (i.e., an instance of the item class) does not include any other objects. A container (i.e., an instance of the container class) may include at least one other object. The CDS is primarily defined by an XML schema but additional constraints may be placed on it by other standards. The XML schema uses the DIDL-Lite element set. DIDL Lite is derived from a subset of DIDL, a Digital Item Declaration Language developed within ISO/MPEG21 (DIDL). An example of a portion of a CDS is provided in the XML fragment 1 below which shows XML data that represents a TV tuner with a number of channels. This example is taken from DLNA guidelines.

### XML fragment 1

| |
|---|
| 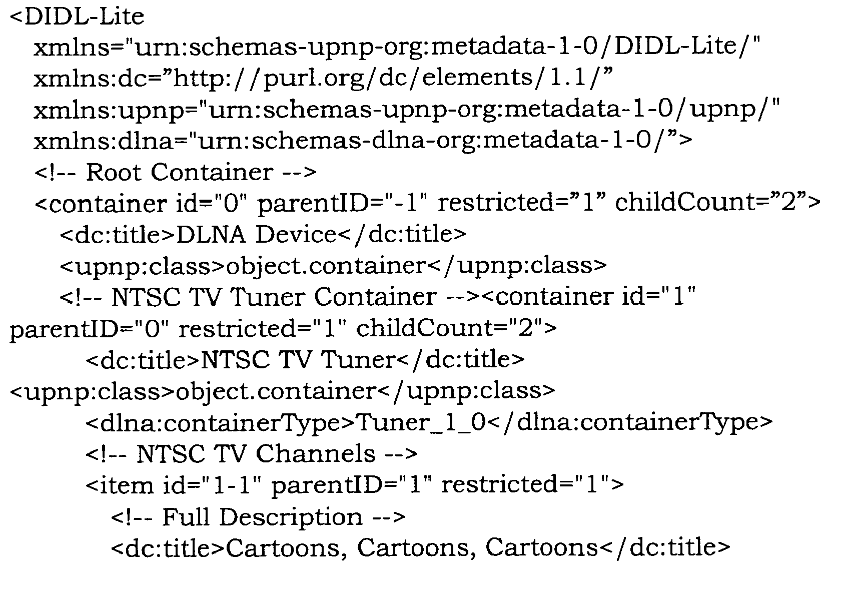 |
| 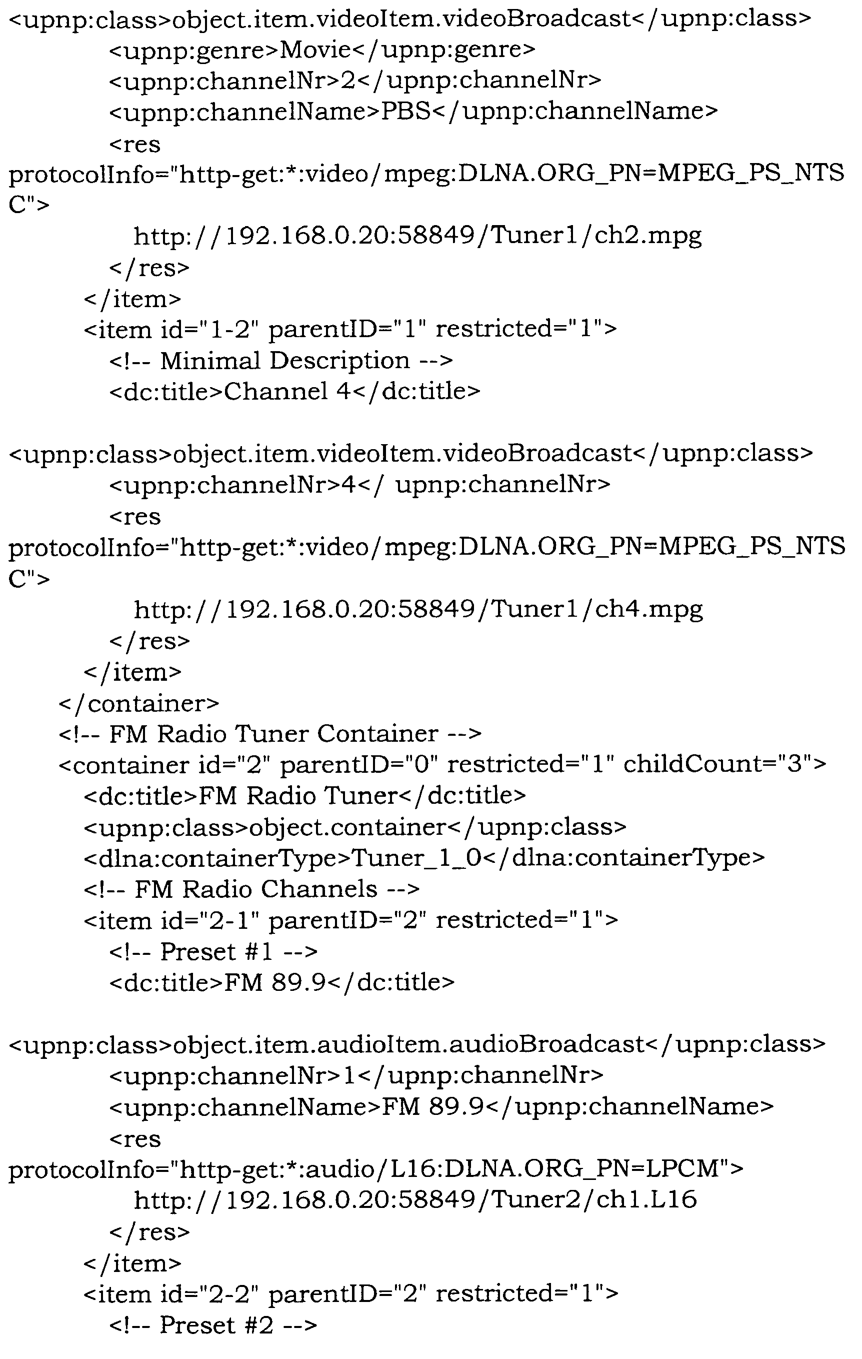 |
| 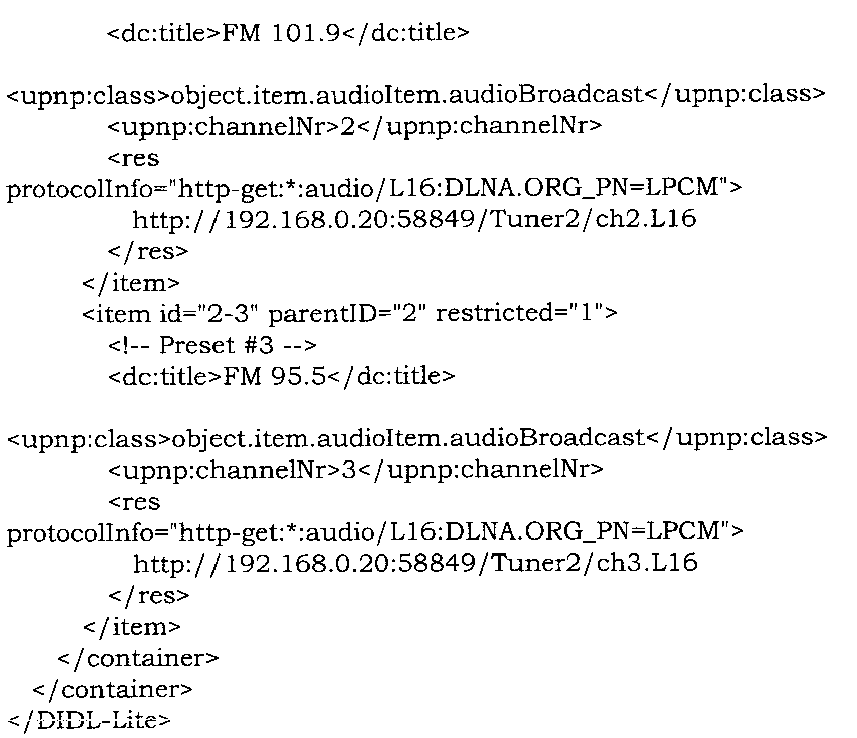 |

Fig. 1 is a high-level block diagram of a home network with the system and method of this invention. The network is illustrated as a wireless network 20, such as an IEEE 802.11 wireless LAN, with a media server 10 and a media renderer 40 connected to the network 20. A wireless LAN is shown for illustration purposes only. However, numerous other types of wireless and wired networks are possible for use with the invention.

The media server 10 is illustrated as being connected to two legacy media source devices (media content items) 30 and 31, such as a video cassette recorder (VCR) and a digital versatile disc (DVD) player, that provide media content. The legacy devices are presented to the media server 10 as "auxiliary" inputs so that their media content, e.g., the actual video files to be sent to the media server 10, are considered as "live" media content. The media server 10, such as a PVR or home media PC, would also typically include a hard disk drive that contains "stored" media content, such as digital videos, photographs and music.

The media server 10 includes at least one IR transmitter XMTR for transmitting IR RC commands to the media source devices 30 and 31. Each media source device 30 or 31 has an IR receiver RCVR and is controllable by an IR RC. The media source devices 30 and 31 are located with their IR receivers RCVR within IR range of the media server's IR transmitter XMTR. Fig. 1 depicts the media sever 10 with only one IR transmitter XMTR but it may have one or more additional IR transmitters XMTR, e.g., with each IR transmitter XMTR assigned to one or more media source devices 30 and 31, to assure IR connection with the multiple media source devices 30 and 31. The IR transmission from the media server 10 to the media source devices 30 and 31 can be facilitated by a commercially available IR "dongle" that plugs into a universal serial bus (USB) or other port on the media server 10 and allows the IR output to be positioned near the media source device's IR receiver RCVR.

The media server 10 also includes a media server adapter 1 for converting the media content from the media source devices 30 and 31 into a format that can be transmitted as an AV media stream over the network 20 to the media renderer 40. The VCR and DVD player media source devices 30 and 31 are for illustration purposes only; numerous other media source devices 30 and 31 are possible, including CD players, audio-tape players, still-image cameras, camcorders, radios and TV tuners, and including other media source devices that supply live media content. In the case of a wireless LAN, the media server adapter 1 would include a wireless transceiver.

The media server 10 also includes a processor (e.g., a microprocessor or microcontroller) 2 as an IR decoder and associated memory 3. The memory 3 includes an encoding/decoding algorithm corresponding to the IR pass-through protocol or scheme that enables RC commands transmitted over the network 20 from the media renderer 40 to be converted into RC commands for transmission by the media server's IR transmitter XMTR to control the VCR 30 and DVD player 31. The media server 10 is capable of handling multiple IR pass-through protocols, so multiple algorithms may be stored in memory 3. The memory 3 also includes the CDS. The CDS is depicted as containing not only a listing of the media content items and associated metadata, but the IR pass-through protocol identifiers (IRPT-IDs) associated with the media content items and the IRPT connection points (IRPT-CPs) associated with the IRPT-IDs. A media content item in the CDS represents a specific media source device. Associated with each media content item in the CDS is at least one IRPT-ID/IRPT-CP pair or a list of IRPT-ID/IRPT-CP pairs. Each pair represents an IR pass-through protocol and its IP connection point. If there are multiple media content items controlled by a single IR transmitter XMTR in the media server 10, then the multiple media content items may have the same IRPT-ID/IRPT-CP pairs. If the media server 10 has more than one IR transmitter, for example a second IR transmitter for controlling a second media source device, then the second media content item may have the same IRPT-IDs as the first media content item, but would have different IRPT-CPs. Based on the IRPT-CP the media server 10 selects which IR transmitter to use.

The media renderer 40 includes a display and a media renderer adapter for converting the network transmission from the media server 10 back to a format capable of being rendered on the display. The media renderer 40 is also controllable by an IR RC and thus includes an IR receiver RCVR. The media renderer 40 also includes a processor (e.g., a microprocessor or microcontroller) and associated memory. As shown in Fig. 1, all of the components of the media renderer 40 may be included in a single unit, such as a digital TV. The media renderer 40 may also be a legacy TV connected to a separate media renderer adapter, in which case the media renderer adapter would include the processor and associated memory. For example, commercial media renderer adapters are available, such as the Linksys® WMA11b that attaches to legacy TVs and stereo systems using standard consumer electronics cables and connects to a home networked PC (the media server 10) through wireless IEEE 802.11b or 10/ 100 Ethernet cabling.

The media renderer's memory contains one or more IR pass-through encoding/decoding algorithms, each algorithm corresponding to a particular type of IR pass-through protocol or scheme and identifiable by a unique IRPT-ID. Each IRPT-ID has an associated internet protocol (IP) connection point (IRPT-CP). The information provided in the CDS allows the media renderer 40 to discover the IRPT-ID/IRPT-CP pair or pairs associated with the media content item when the browse function of the media renderer 40 is initiated. The media renderer 40 browses the CDS to identify the media content item and its associated IRPT-ID/IRPT-CP pair. The IR RC at the media renderer 40 sends RC commands to the media renderer 40 that are encoded using the IR pass-through protocol represented by the IRPT-ID. The output of the IR RC is received by the media renderer's IR receiver RCVR. The processor recalls from memory the IR pass-through encoding algorithm associated with the IRPT-ID and uses this algorithm to encode the IR signal from the IR receiver RCVR. The encoded RC commands are converted by the media renderer adapter to a format that can be transmitted over the network 20 and then transmitted back to the media server adapter 1 in the reverse direction of the AV media stream over the aforesaid network. The media server adapter 1 receives the network transmission and converts it back to encoded RC commands. The encoded RC commands are then decoded by the media server's processor 2 using the same IR pass-through encoding/decoding algorithm identified by the IRPT-ID. The IR RC commands are then transmitted by the media server's IR transmitter XMTR to the IR receiver RCVR on the media source device (the VCR or DVD player) 30 or 31 to control the media source device 30 or 31. If the media server 10 has more than one IR transmitter XMTR, for example, with each one designated for one or more media source devices 30 and 31, the correct IR transmitter XMTR is selected because it is identified by the specific IRPT-CP in the IRPT-ID/IRPT-CP pair.

There are a number of implementations of the invention. To better understand the possible implementations, the XML fragment 2 below shows the baseline case where no IR pass-through protocol support is published in the CDS.

### XML fragment 2

| |
|---|
| 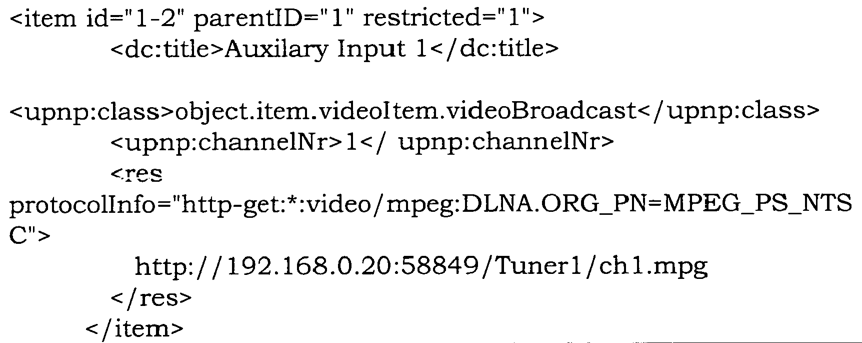 |

This shows that the media content item corresponds to an "auxiliary input" where any type of media source device may be connected. The AV media stream is class "videoBroadcast" indicating that it is live, not stored, media content. The protocol to retrieve the AV media stream is "HTTP" and "GET" method must be used. The media format is defined by DLNA MIME type and is MPEG 2 PS. The host IP address and port number are provided in the URI field of the resource or "res" element.

The XML fragment 3 below shows one implementation where IR pass-through protocol support is added to the baseline case.

### XML fragment 3

| |
|---|
| 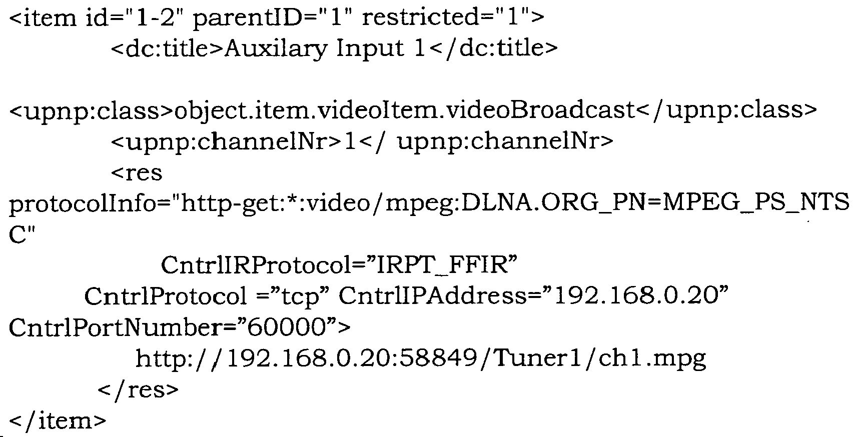 |

In this case new attributes are added to the "res" element associated with the media content item. These new attributes provide the needed information for IR pass-through according to the method of this invention. The "CntrlIRProtocol" attribute functions to inform the media renderer 40 that the media content item is controllable by IR RC and identifies the IR pass-through protocol associated with the media content item (called "FFIR" in XML fragment 3). "CntrlProtocol" identifies the IP protocol used, which can be either TCP or UDP. "CntrlIPAddress" and "CntrlPortNumber" provide the IRPT-CP information.

The method shown by XML fragment 3 requires that the schema be modified to allow new attributes to be understood. In this method only a single IR pass-through protocol is supported per "res" item. Also this method links the IR pass-through protocol to a specific media format (i.e., "res" item), whereas typically there is no dependency between the IR pass-through protocol and the media format.

The XML fragment 4 below shows a second implementation where IR pass-through protocol support is added to the baseline case.

### XML fragment 4

| |
|---|
| 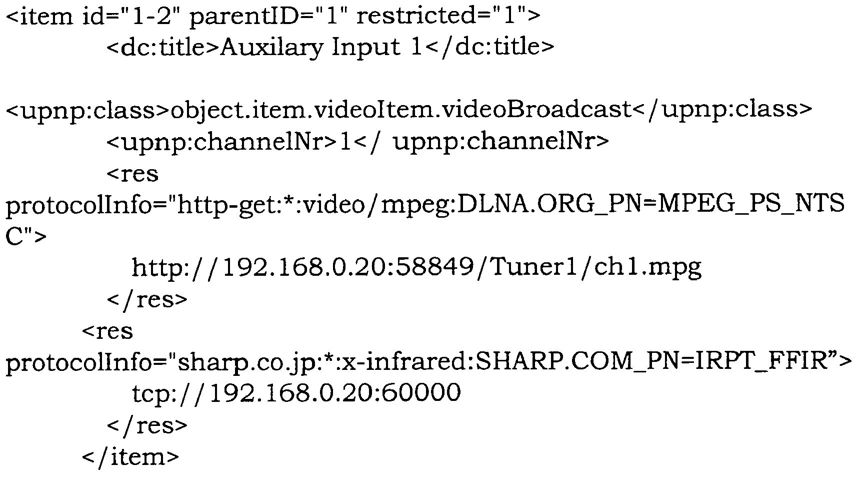 |

In this case a second "res" element is added to the media content item to provide the IRPT-ID and the IRPT-CP. In this case the same property "protocolInfo" is used but the values of the property are used to identify the IR pass-through protocol and the value of the "res" element is used to determine the connection point. The IRPT-ID is defined by the value of the "protocolInfo" attribute. The method defined in UPnP for defining a proprietary protocol is used. In this case the first field "sharp.co.jp" defines this as a Sharp proprietary IR pass-through protocol and the last field "x-infrared:SHARP.COM_PN=IRPT_FFIR" is the MIME type defining the protocol. The "res" element value "tcp://192.168.0.20:60000" provides the IRPT-CP information in a proprietary URI like format.

This method does not require a change to the DIDL-Lite schema. In this method the "res" element is used in an unintended way because the "res" element is designed for some type of binary asset, such as a photo, song, video, etc., and not for a control protocol. However, this does not cause a problem for client devices that browse the CDS because they will typically ignore "res" elements that are not understood. Only clients that understand the "protoco1Info" will use the "res" item. This method also allows multiple different IR pass-through protocols to be published in the CDS without any dependency on the media format.

The XML fragment 5 below shows a third implementation where IR pass-through protocol support is added to the baseline case.

### XML fragment 5

| |
|---|
| 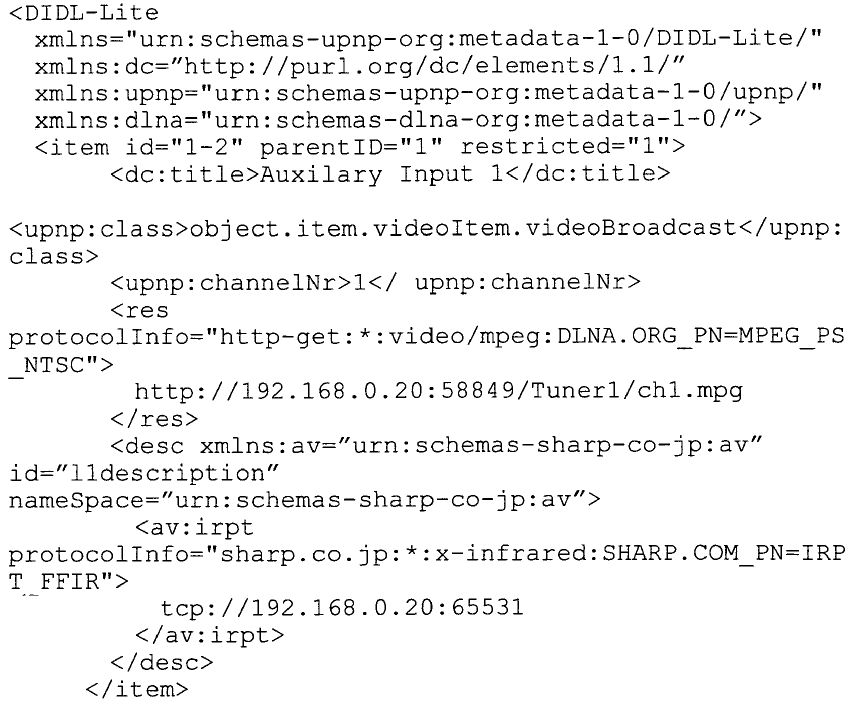 |

In this case a new XML namespace ("xmlnms") is used. A new element "av:irpt" is defined belonging to the namespace "urn:schemas-sharp-co-jp:av". This allows XML parsers which do not understand the proprietary element to ignore it without checking attributes or values of such a proprietary element. This method also conforms to the DIDL-Lite schema.

Lastly, the IR decoder of the media server 10 may be constructed by hardware logic or by software by means of a storage medium (such as the memory 3) storing a decoder program and a processor 2 which executes the decoder program.

While the invention has been particularly shown and described with reference to the preferred embodiments, it will be understood by those skilled in the art that various changes in form and detail may be made without departing from the spirit and scope of the invention. Accordingly, the disclosed invention is to be considered merely as illustrative and limited in scope only as specified in the appended claims.

## Claims

1. An audio-video (AV) media server adapted for connection to a local area network (20) for network transmission of AV media content from a media source device (30, 31), the media server comprising:
an infrared (IR) transmitter (XMTR) for transmitting IR remote control (RC) commands to the media source device (30, 31);
an adapter (1) for conversion of the media content from the media source device (30, 31) to a network transmission format;
an IR decoder (2) for decoding encoded IR RC signals received over the network (20) into RC commands for transmission from the media server's IR transmitter (XMTR) to the media source device (30, 31); and
memory (3) containing media content items representing media source devices (30, 31) available to the server and at least one IR pass-through protocol identifier (IRPT-ID) associated with each media content item and representing the IR pass-through encoding/decoding scheme usable by the media server's IR decoder (2).

2. The media server of claim 1 wherein the memory (3) includes a universal-plug-and-play (UPnP) content directory service (CDS), the media content items being included in the CDS.

3. The media server of claim 2 wherein the CDS is expressed in Extensible Markup Language (XML) and wherein each media content item associated with its at least one IRPT-ID includes a first resource (RES) XML element having a first attribute representing the media format of the media content item.

4. The media server of claim 3 wherein said first (RES) XML element has a second attribute representing the IRPT-ID.

5. The media server of claim 3 wherein each media content item associated with its at least one IRPT-ID includes a second resource (RES) XML element representing the IRPT-ID.

6. The media server of claim 3 wherein each media content item associated with its at least one IRPT-ID is represented in a first XML namespace and the at least one IRPT-ID is represented in a second XML namespace.

7. The media server of claim 1 wherein there are a plurality of IRPT-IDs in the memory (3), each representing a unique IR pass-through encoding/decoding scheme.

8. The media server of claim 1 wherein at least one of the media content items in the memory (3) is a live media content item and wherein the IRPT-ID is associated with said at least one live media content item.

9. The media server of claim 1 wherein the memory (3) includes an internet protocol (IP) connection point (IRPT-CP) associated with each IRPT-ID.

10. The media server of claim 9 wherein the IR transmitter is a first IR transmitter and further comprising a second IR transmitter, each IR transmitter being identified by a IRPT-CP.

11. An audio-video (AV) media server system capable of connection to a local area network (20) for transmission of AV media content on the network (20), the system comprising:
a media server (10) for providing media content to the network (20);
a media source device (30, 31) controllable by infrared (IR) remote control (RC) commands for supplying media content to the media server (10);
an adapter (1) for conversion of the media content to a network transmission format;
an infrared (IR) decoder (2) for decoding encoded IR remote control (RC) signals received over the network (20) into RC commands;
an IR blaster (XMTR) for transmitting the RC commands to the media source device (30, 31) for controlling the media source device (30, 31); and
memory (3) containing a content directory service (CDS) expressed in Extensible Markup Language (XML), the CDS including media content items representing media source devices (30, 31) available to the media server (10) and at least one IR pass-through protocol identifier (IRPT-ID) associated with each media content item and representing the IR pass-through encoding/decoding scheme usable by the IR decoder (2).

12. The system of claim 11 wherein each media content item associated with an IRPT-ID includes a first resource (RES) XML element having a first attribute representing the media format of the media content item and a second attribute representing the IRPT-ID.

13. The system of claim 11 wherein each media content item associated with an IRPT-ID includes a first resource (RES) XML element representing the media format of the media content item and a second resource (RES) XML element representing the IRPT-ID.

14. The system of claim 11 wherein each media content item associated with an IRPT-ID is represented in a first XML namespace and the IRPT-ID is represented in a second XML namespace.

15. The system of claim 11 wherein the CDS includes an internet protocol (IP) connection point (IRPT-CP) associated with each IRPT-ID.

16. The system of claim 11 wherein the IR blaster is a first IR blaster, and further comprising a second IR blaster, each IR blaster being identified by an IRPT-CP.

17. In a local area network (20) for transmission of audio-video (AV) media content from a media source device (30, 31) through a media server (10) to a media renderer (40), a method for enabling infrared (IR) remote control (RC) of the media source device (30, 31) by the media renderer (40), the method comprising:
providing in the media server (10) a content directory service (CDS), the CDS including a media content item representing a media source device (30, 31) providing media content through the media server (10) to the media renderer (40) and at least one IR pass-through protocol identifier (IRPT-ID) associated with the media content item and representing an IR pass-through encoding/decoding scheme;
browsing the CDS from the media renderer (40) to identify the media content item to be transmitted and its associated at least one IRPT-ID;
sending RC commands from a RC to the media renderer (40) via IR;
encoding said RC commands at the media renderer (40) according to the IR pass-through encoding/decoding scheme represented by the at least one IRPT-ID;
transmitting said encoded RC commands from the media renderer (40) over the network (20) to the media server (10);
decoding said RC commands at the media server (10) according to the IR pass-through encoding/ decoding scheme represented by the at least one IRPT-ID; and
transmitting the RC commands via IR from the media server (10) to the media source device (30, 31) to control the operation of the media source device (30, 31).

18. The method of claim 17 wherein providing an IRPT-ID comprises providing the IRPT-ID expressed in Extensible Markup Language (XML) and wherein providing the media content item associated with the IRPT-ID includes expressing a first resource (RES) XML element having a first attribute representing the media format of the media content item.

19. The method of claim 18 further comprising expressing said first resource (RES) XML element having a second attribute representing the IRPT-ID.

20. The method of claim 18 wherein providing the media content item associated with the IRPT-ID includes expressing a second resource (RES) XML element representing the IRPT-ID.

21. The method of claim 18 wherein providing the media content item associated with the IRPT-ID includes expressing the media content item in a first XML namespace and providing the IRPT-ID includes expressing the IRPT-ID in a second XML namespace.

22. The method of claim 17 further comprising providing in the CDS an internet protocol (IP) connection point (IRPT-CP) for each IRPT-ID.

23. The method of claim 17 wherein there are at least two media source devices on the network (20) and wherein transmitting the RC commands via IR from the media server (10) comprises transmitting to said at least two media source devices (30, 31).
